# EUROPEAN PATENT SPECIFICATION

(11) **EP 2 375 910 B1**
(45) Date of publication and mention of the grant of the patent: **18.09.2013**
(21) Application number: 10712516.3
(22) Date of filing: 03.03.2010
(51) Int. Cl.: A23B 5/01, A23B 5/005

(54) **METHOD AND PLANT FOR PASTEURIZING AN EGG-CONTAINING FOOD PRODUCT**
VERFAHREN UND ANLAGE ZUR PASTEURISIERUNG VON EIERHALTIGEM LEBENSMITTELPRODUKT
PROCEDE ET INSTALLATION POUR PASTEURISER UN PRODUIT ALIMENTAIRE CONTENANT DE L'OEUF

(30) Priority: 03.03.2009 IT VI20090044; 02.03.2010 IT VI20100057
(43) Date of publication of application: 19.10.2011
(73) Proprietor: OFFICINE DI CARTIGLIANO S.P.A., 36050 Cartigliano (Vicenza) (IT); Sanovo Technology Italia S.R.L., 36030 Montecchio Precalcino (VI) (IT)
(72) Inventor: SIGNORI, Massimo, I-36027 Rosa' (VI) (IT); COLAVITTI, Roberto, I-36077 Altavilla Vicentina (VI) (IT)
(74) Representative: Maroscia, Antonio
(86) International application number: PCT/IB2010/050917
(87) International publication number: WO 2010/100613

(56) References cited:
- US-A- 4 957 760
- US-A- 5 167 976
- US-A- 5 465 655
- US-A- 5 670 199
- US-A- 5 741 539

## Description

### Field of the invention

The present invention generally finds application in the field of food processing and particularly relates to a method and a plant for pasteurizing an egg-containing food product.

### Background art

Egg-containing food products are known to require thermal processes for bacterial count reduction and shelf life extension.

On the other hand, an excessively strong thermal treatment would tend to cause egg degradation, therefore the best compromise should be found between effectiveness of the treatment and preservation of the rheological properties of the product.

Typically, egg-containing products are usually pasteurized at a temperature of 66-68°C, generally by plate-type or tubular heat exchangers, and then are held at such temperature in a conduit, preferably of thermal-insulated type, for a predetermined time.

A typical process for pasteurizing yolk-based liquid products, as disclosed in US 5,465,655, first includes the step of moving the raw product from a storage tank to a pre-heating station in which the product is heated to about 50°C.

Then, the product is further heated to a higher temperature, generally from 60°C to 80°, to effect pasteurization proper.

At the end of this step, the product is held at its temperature in insulated conduits for stabilization.

Then, the product undergoes a cooling step for storage, for instance, at ambient temperature or lower.

US-5741539 discloses a method for pasteurizing egg-containing product including a step of heating the product by passage of an electric current therethrough.

While such treatment affords commercially interesting final microbial counts, it is still susceptible to further improvements, in terms of even lower microbial counts and hence extended shelf life.

### Disclosure of the invention

The object of the present invention is to achieve the final results as mentioned above by providing a method for pasteurizing egg-containing food products that affords effective reduction of microbial counts white maintaining its rheological properties almost unchanged.

Another object of the invention is to provide a method for pasteurizing egg-containing food products that affords extended shelf life.

These and other objects, as better explained hereafter, are fulfilled by a method for pasteurizing egg-containing food products as defined in claim 1.

The method requires the product to be introduced at the fluid or pasty state into a plant having at least one conduit with an inlet and an outlet, and comprises the following sequence of operating steps:
a) heating the product in a first section of the conduit at a first operating speed and for a first maximum operating time to a first operating temperature above 50°C;
b) holding the product a first time in a first thermal holding area of said conduit at a first holding speed and for a first predetermined holding time;
c) overheating the product in a second section of said conduit (6) at a second operating speed and for a second maximum operating time by applying a radio-frequency electromagnetic field to a second operating temperature.

The second operating temperature is higher than said first operating temperature, the second operating speed is adapted to establish a relatively turbulent regime in the product in said second section of the conduit, and said second maximum operating time is from 0,1 s to 5 s.

As used herein, the term "thermal holding" is intended to designate a step in which the product is continuously fed within the product in which it is contained and is not heated.

The Applicant has surprisingly found that, as the product undergoes a radio-frequency overheating step at a speed adapted to establish a relatively turbulent regime and for a maximum operating time from 0.1 s to 5 s, the final microbial counts are of the order of about one logarithm lower than traditional plants, which considerably extends the shelf life of egg-containing products, whether egg is intended as egg white only, yolk only or both.

Advantageously, during the second heating step, the product may be heated to a temperature from 55°C to 75°C, to prevent the risk of degradation of the product to be treated.

The product so treated might possibly undergo an additional holding step. Generally, only yolk- or egg white and yolk-containing products may undergo such second holding step, whereas only egg white- containing products might avoid this step.

As used herein, the term "only yolk-containing product" shall be intended to designate a food product containing a yolk content much higher than the egg white content. For purposes of illustration, such yolk content may be 90% or higher, to 100% in an egg white-free product.

As used herein, the term "only egg white-containing product" shall be intended to designate a food product containing an egg white content much higher than the yolk content. For purposes of illustration, such egg white content may be 90% or higher, to 100% in a yolk-free product.

As used herein, the term "egg white and yolk-containing product" shall be intended to designate a product in which the egg yolk content is not preponderant with respect to the egg white content. By way of illustration, such content may be lower than 90% and higher than 10%.

During such second holding step, the product may be held in the conduit at a maximum speed of 3 m/s, preferably from 0.5 m/s to 2.5 m/s.

In another aspect, the invention relates to a plant for treating an egg-containing food product, as defined in claim 13.

The plant may include means for carrying out the first heating step at a first operating temperature above 50°C and means for carrying out the second product heating step using a radio-frequency electromagnetic wave generator, at a second temperature higher than the first temperature.

The dependent claims disclose advantageous embodiments of the method and plant of the invention.

### Brief description of the drawings.

Further characteristics and advantages of the invention will be more apparent from the detailed description of a preferred, non-exclusive embodiment of a plant according to the invention, which is described as a non-limiting example with the help of the annexed drawing, in which:

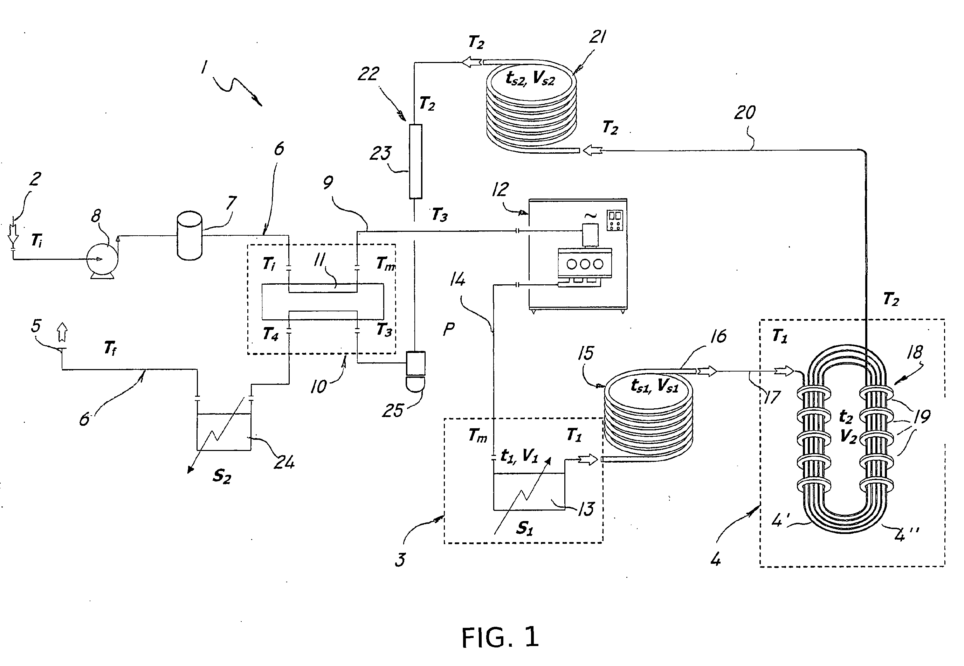

- FIG. 1 is a schematic view of a plant for treating egg-containing food products.

### Detailed description of a few preferred embodiments

Referring now to FIG. 1, a plant is shown which is particularly suitable for thermal treatment, and more particularly pasteurization, of an egg white- and/or yolk-containing food product, generally designated by numeral 1.

The plant 1 may essentially have an inlet 2 for introducing the product to be treated at the fluid state, a product heating station 3, a product overheating station 4 and an outlet 5 for the final treated product, which are all in fluid connection via a line or conduit 6.

One or more containers, not shown, may be provided upstream from the inlet 2 and downstream from the outlet 5, for storage of the product before and after treatment respectively.

Possibly, an intermediate checking and balancing tank 7 may be provided for confirming that a proper level of product is always present in the conduit 6. Such check will be performed in a well-known manner, using appropriate electronic level sensors.

The product to be treated may be collected from the storage container upstream from the inlet 2, in which it will be at a starting storage temperature Tᵢ.

The storage temperature Tᵢ will be relatively low, e.g. close to 5°C, or even lower than 0°C.

The product will be later conveyed by appropriate means 8 designed for circulating it within the conduit 6 through a first portion 9 of the conduit 6 to the heating station 3.

The circulating means 8 may essentially include a pump whose capacity will be selected according to the requirements and composition of the product to be treated.

A pre-heating station 10 may be optionally provided along the first portion 9 of the conduit 6, having a heat recuperator 11 possibly of known type and whose operation will be better explained hereinafter, and a homogenizer 12 also of known type.

The product may be pre-heated in the recuperator 11 from the starting storage temperature Tᵢ to an intermediate pre-heating temperature Tₘ, which may fall, for instance, in a range from 20°C to 30°C.

The heating station 3 may include a plate-type and/or tubular heat exchanger 13, through which the first portion 14 of the conduit 6 extends.

Once the product has reached the heat exchanger 13, according to a prior art technique, a hot stream S₁ may flow thereon, whereby it may undergo a first heating from the intermediate temperature Tₘ to a first operating temperature T₁ which may be generally 50° of more. Preferably, said first operating temperature T₁ will be lower than 70°C.

In case of an only yolk-containing product, such as yolk-mousse, a high-protein beverage, heating may occur at an operating temperature T₁ from 60°C to 70°C and preferably about 64°C.

In case of an only egg white-containing product, or a product having a much higher egg white content than the yolk content, e.g. 90% or higher, heating may occur at an operating temperature T₁ from 50°C to 60°C and preferably about 56°C. An only egg white containing product may be a pastry cream.

Finally, if the product contains both egg white and yolk in such relative contents that one component is not preponderant over the other, the first heating step may occur at an operating temperature T1 from 63°C to 70°C and preferably about 66°C. A egg white- and yolk-containing product may be an ice cream.

The heating step may be carried out with the product moved in the first portion 14 at a first predetermined operating speed V₁ and for a first predetermined operating time, selected according to the temperatures to be reached and the size of the conduit 6.

After such heating step, the product may reach a first thermal holding section 15 in which it will move within an intermediate portion 16 of the conduit 6, which connects the heating station 3 to the overheating station 4.

The intermediate portion 16 may be suitably insulated and sized for the product to undergo a first thermal holding step for a minimum holding time tₛ₁ of 80 s.

Such first thermal holding time tₛ₁ may be of less than 600 s and preferably from 100 s to 400s.

In case of an only yolk-containing product, or a product having a much higher yolk content than the egg white content, the first thermal holding step may occur during a first time tₛ₁ from 280 s to 400 s.

Also, in case of an only egg white-containing product, or a product having a much higher egg white content than the yolk content, the first thermal holding step may occur during a first time tₛ₁ from 100 s to 200 s.

Finally, if the product contains both egg white and yolk in such relative contents that one component is not preponderant over the other, the first thermal holding step may occur during a first time tₛ₁ from 100 s to 200 s.

In the intermediate portion 16, during this first thermal holding step, the product may slide at a first holding speed Vₛ₁, by way of indication from 0.05 m/s to 1 m/s, and preferably between 0.1 m/s to 0.5 m/s.

The intermediate section 16 may be sized as a function of the first time tₛ₁ and/or the first holding speed Vₛ₁, as needed.

According to the invention, the overheating station 4 will have a second portion 17 of the conduit 6 extending therethrough and will include a radio-frequency oscillating electromagnetic field generator.

The electromagnetic waves generated by the generator will be applied to the portion 17 of the conduit 6 by an appropriate applicator 18, e.g. operating by annular electrodes 19, according to the teachings of the International application WO20066136882.

Once the product has reached the applicator 18, having substantially the temperature T₁ at the inlet thereof, it will undergo, according to a peculiar feature of the invention, direct overheating to a temperature T₂ higher than the first operating temperature T₁.+

By way of illustration, the second operating temperature T₂ may be above 55°C and below 75°C.

Particularly, the applicator 18 will be designed to generate an electromagnetic field with waves of a frequency falling in the radio-frequency range, e.g. of the order of 27.12 MHz or multiples thereof, and to direct the field to a local area through which the second section 17 of the conduit 6 will extend.

In case of an only yolk-containing product, or a product having a much higher yolk content than the egg white content, overheating may occur at an operating temperature T₂ from 65°C to 80°C and preferably about 70°C.

Also, in case of an only egg white-containing product, or a product having a much higher egg white content than the yolk content, overheating may occur at an operating temperature T₂ from 55°C to 65°C.

Preferably, the second operating temperature T₂ will be from 59°C to 65°C and more preferably about 60°C.

Finally, if the product contains both egg white and yolk in such relative contents that one component is not preponderant over the other, overheating may occur at an operating temperature T₂ from 65°C to 75°C.

It shall be understood that the above values may change according to the amount of each component as well as any additive.

For instance, in the case of an egg yolk and white mixture with an additional amount of salt or sugar added thereto, or of yolk only with added salt or sugar, overheating may occur at a second temperature T₂ of about 75°C.

During overheating, the product will be fed into the second portion 17 of the conduit 6 at a second minimum operating speed V₂ which is enough to allow the product to move across the electromagnetic field in a very short time t₂.

It was found to be important for the product to be overheated for a limited, well-controlled time t₂, as the permanence of the product in the electromagnetic field for as little as one additional fraction of time might involve an excessive increase of temperature which might lead to degradation of the rheological characteristics of the product.

Particularly, the speed V₂ of the product in the second portion 17 should be selected for the product to remain in the radio-frequency field, and thus under overheating conditions, for a second maximum operating time t₂ from 0.1 s to 5 s and preferably not longer than 0.3 s.

Optimal values for the second operating speed V₂ will fall in a range from 0.5 m/s to 10 s, preferably from 2 m/s to 9 s and more preferably will be about 8 m/s.

Particularly, in products containing yolk only, egg white only or egg white and yolk mixtures, an optimal value for the second operating speed V₂ was found to be substantially close to 8.7 m/s.

For only yolk-containing products with added salt or sugar, optimal values for the second operating speed V₂ were found to fall in a range from 4 m/s to 5 m/s, e.g. close to 4.35 m/s.

Those skilled in the art might select the size of the second portion 17 according to the second operating speed V₂ as needed.

The maintenance of these product speed values V₂ during overheating is essential because in this step the applicator 18 will transfer a large amount of energy to the moving product. Accordingly, the product in the portion 17 of the conduit 6 will have as turbulent a motion as possible, according to viscosity.

High speed values V₂ will cause a substantially uniform motion of all the particles of the product and will prevent them from staying in the overheating station for too long a time t₂.

In a preferred embodiment, the overheating step may be carried out at two successive times, with an intermediate thermal holding step for a thermal holding time tₛᵢ of about 1 s.

For this purpose, the overheating station 4 may be divided into two substations 4', 4' having a holding station therebetween, with the latter possibly consisting of an intermediate portion of the second portion 17 external to the electromagnetic field.

At the exit of the applicator 18, the product may move into a third portion 20 of the conduit 6 through a second holding area 21, which may be appropriately insulated and sized for the product to remain at the temperature T₂ for a minimum operating holding time tₛ₂.

The second thermal holding time tₛ₂ will probably fall in a range from 1 s to 150 s, and preferably from 3 s to 100 s.

In case of an only yolk-containing product, or a product having a much higher yolk content than the egg white content, the second thermal holding step may occur for a second thermal holding time tₛ₂ from 10 s to 20 s, preferably about 8 s.

The same second thermal holding time tₛ₂ may be provided for an only egg white-containing product, or a product having a much higher egg white content than the yolk content.

Finally, if the product contains an egg white and yolk mixture in such relative contents that one component is not preponderant over the other, the second thermal holding step may occur for a second holding time tₛ₂ from 20 s to 150 s and preferably about 80 s.

During such second holding step, the product may be held at a second thermal holding speed Vₛ₂ of 0.3 m/s to 5 m/s, preferably from 0.5 m/s to 3 m/s and more preferably from 1 m/s to 2.1 m/s.

Those skilled in the art may appropriately select the size of the section according to the second holding time tₛ₂ and/or speed V₂ as needed.

Once the product comes out of the third portion 20 of the conduit 6, it may possibly move to a further cooling station 22 immediately downstream from the second holding station 21 for quickly cooling the product and prevent denaturation thereof.

The station 22 may include a common heat exchanger 21 of relatively small size.

Thus, the product will be cooled from the temperature T₂ to a lower temperature T₃.

Once the product comes out of the heat exchanger 23, it will move into the recuperator 10, where it will be used as a heating means and will be cooled from the temperature T₃ to a lower temperature T₄, by intersection with the product from the inlet 2, which will have been preheated, as mentioned above, from the starting temperature Tᵢ to the intermediate temperature Tₘ.

The stream of treated product that comes out of the recuperator 10 may be further cooled in the cooler 24, i.e. a heat exchanger of known type, in which a cold stream S₂ will cool it from the temperature T₄ to a final temperature T_{f}, for storage in the container downstream from the exit 5.

According to a particularly advantageous embodiment of the inventive method, the product may be pressurized in a portion of the conduit 6, to establish an overpressure P susceptible of reducing the amount of air in the product being treated.

Such overpressure may be present at least in the second portion 17 of the conduit 6, in the overheating station.

Advantageously, the overpressure P will be present at least in the portion of the conduit 6 downstream from the pre-heating station 10, which extends through the heating station 3 and the overheating station 4.

In a preferred configuration, the overpressure P will be present in the conduit 6 at least to the end of the second holding area 21.

Thus, the pressurizing step will be carried out from at least the heating step to at least the end of the second holding step.

Optimal overpressure values P will fall in a range from 5 bar to 40 bar and may change according to the type of product being treated.

The overpressure P will eliminate or at least reduce the air content in the product. Furthermore, any air bubbles trapped in the product would be reduced and substantially evenly arranged throughout the product.

Therefore, the product will be more uniformly heated, with no excessively overheated parts that might be subjected to breaking.

Excessively large air bubbles were found to be susceptible of causing evaporation during overheating, and thus a local increase of temperature, which will cause coagulation or baking of the product around the air bubbles.

For example, the additional pressure may be applied by arranging appropriate valve means 25 connected to the conduit 6 downstream from the overheating station 4, preferably downstream from the second holding station 18.

These valve means 25 will be susceptible of causing the conduit 6 to be locally necked down, thereby generating a backpressure in the portion of the conduit 6 upstream from the means 25.

The valve means 25 may be easily replaced by any device adapted to create a pressure in the conduit 6.

Advantageously, all the steps of the inventive method may be carried out with the food product continuously fed in the conduit 6 or at least in the section thereof between the start of the heating station 3 and the end of the second holding station 21.

The following Table 1 shows certain preferred ranges of process parameters, in certain embodiments of the method of the invention, which are provided by way of illustration and without limitation.

**TABLE 1**

| Product | Second op. temp. T₂ (°C) | Second op. time t₂ (^{s}) | Second op. speed V₂ (m/s) | Second holding time Tₛ₂ (s) | Second holding speed Vₛ₂ (m/s) | Overpressure P (bar) |
|---|---|---|---|---|---|---|
| Mixed | 70-80 | 0,1-3 | 2-10 | 20-150 | 0,5-3 | 5-40 |
| Yolk | 70-80 | 0,1-3 | 2-10 | 3-100 | 0,5-3 | 5-40 |
| Egg white | 59-65 | 0,1-3 | 2-10 | 3-100 | 0,5-3 | 5-40 |
| Salted mix | 70-80 | 0,1-3 | 2-10 | 20-150 | 0,5-3 | 5-40 |
| Salted yolk | 70-80 | 0,1-3 | 2-10 | 20-150 | 0,5-3 | 10-40 |
| Sweet mix | 70-80 | 0,1-3 | 2-10 | 20-150 | 0,5-3 | 5-40 |
| Sweet yolk | 70-80 | 0,1-3 | 2-10 | 20-150 | 0,5-3 | 10-40 |

The following Table 2 shows certain preferred ranges of process parameters, for the same embodiments as those of Table 1, which are provided by way of illustration and without limitation.

**TABLE 2**

| Product | Second op. temp. T₂ (°C) | Second op. time t₂ (^{s}) | Second op. speed V₂ (m/s) | Second holding time Tₛ₂ (s) | Second holding speed Vₛ₂ (m/s) | Over pressure P (bar) |
|---|---|---|---|---|---|---|
| Mixed | 73 | 0,3 | 8,7 | 80 | 2,1 | 5-40 |
| Yolk | 72 | 0,3 | 8,7 | 8 | 2,1 | 10-40 |
| Egg white | 60 | 0,3 | 8,7 | 8 | 2,1 | 5-40 |
| Salted mix | 75 | 0,3 | 8.7 | 80 | 2,1 | 5-40 |
| Salted yolk | 75 | 0,6 | 4,35 | 40 | 1,05 | 10-40 |
| Sweet mix | 75 | 0,3 | 8,7 | 80 | 2,1 | 5-40 |
| Sweet yolk | 75 | 0,6 | 4,35 | 40 | 1,05 | 10-40 |

The above disclosure clearly shows that the invention fulfils the intended objects, and particularly meets the requirement of providing a method for pasteurizing egg-containing food products that can effectively reduce microbial counts and extend the shelf life as compared with prior art methods, without denaturing the product.

The method and plant of this invention are susceptible to a number of changes or variants, within the inventive concept disclosed in the appended claims. All the details thereof may be replaced by other technically equivalent parts, and the materials may vary depending on different needs, without departure from the scope of the invention.

Those skilled in the art will be capable of selecting the sizes of the various parts of the plant to adapt it to the desired process parameters.

Particularly, those skilled in the art may select the sizes of the various sections of the line 6 according to the above holding parameters, as needed. Likewise, those skilled in the art may select the heat exchanger 13, or replace it with any equivalent apparatus, according to the desired temperature drop T₁ - Tₘ. Also, those skilled in the art may select the size and settings of the applicator 18, or replace it with any equivalent applicator, according to the desired temperature drop T₂ - T₁.

While the method and plant of the invention have been described with particular reference to the accompanying figures, the numerals referred to in the disclosure and claims are only used for the sake of a better intelligibility of the invention and shall not be intended to limit the claimed scope in any manner.

## Claims

1. A method for pasteurizing an egg-containing food product, wherein the product is introduced in a fluid state into a plant (1) having at least one conduit (6) with an inlet (2) and an outlet (5), the method comprising at least the following steps:
a) heating the product in a first section (14) of said conduit (6) at a first operating speed (V₁) and for a first maximum operating time (t₁) to a first operating temperature (T₁) above 50°C;
b) holding the product a first time in a first thermal holding area (16) of said conduit (6) at a first holding speed (Vₛ₁) and for a first predetermined thermal holding time (tₛ₁);
c) overheating the product in a second section (17) of said conduit (6) to a second operating temperature (T₂) higher than said first operating temperature (T₁);
**characterized in that** in said overheating step (c) is carried out by applying directly to the product into said second section (17) a radio-frequency oscillating electromagnetic field without any passage of electric current through the product, the product being fed into the second portion (17) of the conduit (6) with a second minimum operating speed (V₂) comprised between 0,5m/s and 10m/s to provide a turbulent regime in the product and to remain within the electromagnetic field for a second maximum operating time (t₂) comprised between 0,1s and 5s in such a manner to achieve an effective reduction of microbial counts while avoiding degradation and denaturing of the product.

2. Method as claimed in claim 1, **characterized in that** said second maximum operating time (t₂) is comprised between 0,1s and 3s.

3. Method as claimed in claim 1 or 2, **characterized in that** said second operating temperature (T₂) is comprised between 55°C and 75°C.

4. Method as claimed in one or more of the preceding claims, **characterized in that** said second operating speed (V₂) is comprised between 2 m/s and 9m/s and more preferably is about 8 m/s.

5. Method as claimed in one or more of the preceding claims, **characterized in that** after said overheating step (c) a second thermal holding step (d) is provided, in which the product is held at said second operating temperature (T₂) for a second thermal holding time (tₛ₂) preferably comprised between 1 s and 150 s, more preferably between 3 s and 100 s.

6. Method as claimed in claim 5, **characterized in that**, during said second thermal holding step (d), the product flows into said conduit (6) at a second holding speed (Vₛ₂) of 0,3 m/s to 5 m/s, preferably from 0,5 m/s to 3 m/s and more preferably from 1 m/s to 2,1 m/s.

7. Method as claimed in one or more of the preceding claims, **characterized in that** after said holding step (b) the product undergoes a pressurizing step e) at an overpressure (P) susceptible of reducing the air content in the product in said second section (17).

8. Method as claimed in claim 7, **characterized in** said overpressure (P) is comprised between 5 bar and 40 bar.

9. Method as claimed in claim 7 or 8, **characterized in that** said pressurization step e) is carried out downstream from said heating step a) and to the end of said second thermal holding step f).

10. Method as claimed in one or more of the preceding claims, **characterized in that** an intermediate thermal holding step g) is provided during said overheating step c) for a third predetermined thermal holding time (tₛᵢ).

11. Method as claimed in claim 10, **characterized in that** said third thermal holding time (tₛᵢ) is substantially about 1 s.

12. Method as claimed in one or more of claims 5 to 11, **characterized in that** a product cooling step h) is provided immediately after said second thermal holding step d) and a product preheating step i) is provided before said heating step a).

13. A plant for pasteurizing an egg-containing food product applying the method as claimed in one or more of claims 1 to 12, comprising:
- a heating section (3) for heating the product to a first operating temperature (T₁) above 50°C;
- an overheating section (4) for overheating the product to a second operating temperature (T₂) higher than said first operating temperature (T₁);
- oscillating means (18) for generating a radio-frequency electromagnetic field in said overheating section (4);
- at least one conduit (6) including an inlet (2) and an outlet (5), a first portion (14) extending through said heating section (3), a second portion (17) extending through said overheating section (4) and at least one connecting portion (16) to connect said heating section (3) to said overheating section (4);
- at least one first thermal holding section (15) comprised in said intermediate portion (16);
- means (8) for circulating the product in said conduit (6);
**characterized in that** said oscillating means (18) comprises an applicator (19) for radiating said second conduit portion (17) with said radio-frequency electromagnetic field and with no electrode in contact with the product, said circulating means (8) being adapted to circulate the product in said overheating section (4) at a second operating speed (V₂) comprised between 0,5m/s and 10m/s to provide a relative turbulent regime in the product for a maximum operating time (t₂) of 0,1s to 5s, in such a manner to achieve an effective reduction of microbial counts while avoiding degradation and denaturing of the product.

14. Plant as claimed in claim 13, **characterized in that** it comprises valve means (25) for pressurizing at least said connecting portion of said conduit to an overpressure higher than atmospheric pressure, preferably from 5 bar to 40 bar.

## Patentansprüche

1. Verfahren zur Herstellung eines Ei enthaltenden Lebensmittels, wobei das Lebensmittel in einem flüssigen Zustand in eine Anlage (1) mit mindestens einer Leitung (6) mit einer Zufuhr (2) und einem Auslass (5) übergeführt wird, wobei das Verfahren mindestens die folgenden Schritte umfasst:
a) Erhitzen des Lebensmittels in einem ersten Abschnitt (14) dieser Leitung (6) bei einer ersten Betriebsgeschwindig-keit (V₁) und während einer ersten maximalen Betriebsdauer (t₁) auf eine erste Betriebstemperatur (T₁) über 50° C,
b) Halten des Lebensmittels zuerst in einem ersten Wärmekonservierungsabschnitt (16) dieser Leitung (6) bei einer ersten Haltegeschwindigkeit (Vₛ₁) und während einer ersten vorbestimmten Wärmekonservierungsdauer (tₛ₁),
c) Übererhitzen des Lebensmittels in einem zweiten Abschnitt (17) dieser Leitung (6) auf eine zweite Betriebstemperatur (T₂), die höher ist als die erste Betriebstemperatur (T₁),
**dadurch gekennzeichnet, dass** der Schritt c) des Übererhitzens ausgeführt wird, indem an das Lebensmittel in dem zweiten Bereich (17) ein mit Radiofrequenz oszillierendes elektro-magnetisches Feld direkt angelegt wird ohne jeden Durchgang von elektrischem Strom durch das Lebensmittel, das Lebensmit-tel in den zweiten Abschnitt (17) dieser Leitung (6) mit einer zweiten minimalen Betriebsgeschwindigkeit (V₂) zwischen 0,5 m/s und 10 m/s eingeführt wird, um einen turbulenten Zustand in dem Lebensmittel zu erzeugen und in dem elektromagnetischen Feld zu bleiben während einer zweiten maximalen Betriebsdauer (t₂) zwischen 0,1 s und 5 s, so dass eine tatsächliche Reduktion mikrobieller Treffer erreicht wird und eine Verschlechterung und Entartung des Lebensmittels vermieden wird.

2. Verfahren gemäß Anspruch 1, **dadurch gekennzeichnet, dass** die zweite maximale Betriebsdauer (t₂) zwischen 0,1 s und 3 s ist.

3. Verfahren gemäß Anspruch 1 und 2, **dadurch gekennzeichnet, dass** die zweite Betriebstemperatur (T₂) zwischen 55° C und 75° C ist.

4. Verfahren gemäß einem oder mehreren der vorhergehenden Ansprüche, **dadurch gekennzeichnet, dass** die zweite minimale Betriebsgeschwindigkeit (V₂) zwischen 2 m/s und 9 m/s und vorzugsweise um 8 m/s ist.

5. Verfahren gemäß einem oder mehreren der vorhergehenden Ansprüche, **dadurch gekennzeichnet, dass** nach dem Schritt c) des Übererhitzens ein zweiter Wärmekonservierungsschritt (d) vorgesehen ist, bei dem das Lebensmittel bei der zweiten Betriebstemperatur (T₂) gehalten wird während einer zweiten Wärmekonservierungsdauer (tₛ₂), die vorzugsweise zwischen 1 s und 150 s und noch vorzugsweiser zwischen 3 s und 100 s ist.

6. Verfahren gemäß Anspruch 5, **dadurch gekennzeichnet, dass** während des zweiten Wärmekonservierungsschritts (d) das Lebensmittel in die Leitung (6) fließt mit einer zweiten Erhaltegeschwindigkeit (Vₛ₂) zwischen 0,3 m/s bis 5 m/s, vorzugsweise von 0,5 m/s und 3 m/s und noch vorzugsweiser von 1 m/s bis 2,1 m/s.

7. Verfahren gemäß einem oder mehreren der vorhergehenden Ansprüche, **dadurch gekennzeichnet, dass** nach dem Schritt b) des Haltens das Lebensmittel einem Schritt e) des Pressens bei einem Überdruck (P) ausgesetzt ist, der geeignet ist den Luftgehalt in dem Lebensmittel in dem zweiten Bereich (17) zu reduzieren.

8. Verfahren gemäß Anspruch 7, **dadurch gekennzeichnet, dass** der Überdruck (P) zwischen 5 bar und 40 bar ist.

9. Verfahren gemäß Anspruch 7 oder 8, **dadurch gekennzeichnet, dass** der Schritt e) des Pressens nach dem Schritt a) des Erhitzens und am Ende des zweiten Wärmekonservierungsschritts f) erfolgt.

10. Verfahren gemäß einem oder mehreren der vorhergehenden Ansprüche, **dadurch gekennzeichnet, dass** ein Zwischen-Wärmekonservierungsschritt g) erfolgt während des Schritts c) des Übererhitzens während einer dritten vorbestimmten Wärmekonservierungsdauer (tₛᵢ).

11. Verfahren gemäß Anspruch 10, **dadurch gekennzeichnet, dass** die dritte vorbestimmte Wärmekonservierungsdauer (tₛᵢ) im Wesentlichen ungefähr 1 s ist.

12. Verfahren gemäß einem oder mehreren der vorhergehenden Ansprüche 5 bis 11, **dadurch gekennzeichnet, dass** ein Schritt h des Kühlens des Lebensmittels erfolgt unmittelbar nach dem zweiten Wärmekonservierungsschritt d) und ein Schritt i) des Vorwärmens des Lebensmittels erfolgt vor dem Schritt a) des Wärmens.

13. Eine Anlage zum Pasteurisierens eines Ei enthaltenden Lebensmittels gemäß einem oder mehreren der vorhergehenden Ansprüche 1 bis 12, mit
einem Abschnitt (3) zum Erhitzen des Lebensmittels auf eine erste Betriebstemperatur (T₁) über 50° C,
einem Abschnitt (4) zum Übererhitzen des Lebensmittels auf eine zweite Betriebstemperatur (T₂), die höher ist als die erste Betriebstemperatur (T₁),
Oszillationsmitteln (18) zur Erzeugung eines elektromagnetischen Felds mit Radiofrequenz in dem Abschnitt (4) zum Übererhitzen,
mindestens einer Leitung (6) mit einer Zufuhr (2) und einem Auslass (5), wobei ein erster Abschnitt (14) sich durch den Abschnitt (3) zum Erhitzen erstreckt, ein zweiter Abschnitt (17) sich durch den Abschnitt (4) zum Übererhitzen erstreckt, und mindestens einem Verbindungsabschnitt (16), um den Abschnitt (3) zum Erhitzen mit dem Abschnitt (4) zum Übererhitzen zu verbinden,
mindestens einem ersten Wärmekonservierungsbereich (15) in dem Zwischenabschnitt (16),
Mitteln zum Bewegen (8) des Lebensmittels in dieser Leitung (6),
**dadurch gekennzeichnet, dass** die Oszillationsmittel (18) einen Sender (19) umfassen zum Bestrahlen des zweiten Leitungsabschnitts (17) mit dem mit Radiofrequenz oszillierenden elektromagnetischen Feld, wobei keine Elektrode an das Lebensmittel angelegt ist, wobei das Bewegungsmittel (8) so ausgelegt ist, dass das Lebensmittel in dem Überhitzungsabschnitt (4) bewegt wird bei einer zweiten minimalen Betriebsgeschwindigkeit (V₂) zwischen 0,5 m/s und 10 m/s eingeführt wird, um einen relativ turbulenten Zustand in dem Lebensmittel zu erzeugen während einer maximalen Betriebsdauer (t₂) zwischen 0,1 s und 5 s, so dass eine tatsächliche Reduktion mikrobieller Treffer erreicht wird und eine Verschlechterung und Entartung des Lebensmittels vermieden wird.

14. Anlage gemäß Anspruch 13, **dadurch gekennzeichnet, dass** Ventileinrichtungen (25) vorgesehen sind zum Druckbeaufschlagen von mindestens dem Verbindungsabschnitt der Leitung zu einem Überdruck höher als der Atmosphärendruck, vorzugsweise von 5 bar bis 40 bar.

## Revendications

1. Procédé pour pasteuriser un produit alimentaire contenant des oeufs, où le produit est introduit dans un état liquide dans une installation (1) ayant au moins un conduit (6) avec une entrée (2) et une sortie (5), le procédé comprenant au moins les étapes suivantes :
a) réchauffage du produit dans une première section (14) dudit conduit (6) à une première vitesse de fonctionnement (V₁) et pour un premier temps de fonctionnement maximum (t₁) à une première température de fonctionnement (T₁) au-dessus de 50°C ;
b) maintien du produit une première fois dans une première zone de maintien thermique (16) dudit conduit (6) à une première vitesse de maintien (Vₛ₁) et pour un premier temps de maintien thermique prédéterminé (tₛ₁) ;
c) surchauffe du produit dans une deuxième section (17) dudit conduit (6) à une deuxième température de fonctionnement (T₂) supérieure à ladite première température de fonctionnement (T₁) ;
**caractérisé en ce que** ladite étape de surchauffe (c) est réalisée en appliquant directement au produit à l'intérieur de ladite deuxième section (17) un champ electromagnétique oscillant de radiofréquence sans aucun passage de courant électrique à travers le produit, celui-ci étant alimenté dans une deuxième portion (17) du conduit (6) à une deuxième vitesse minimale de fonctionnement (V₂) comprise entre 0,5m/s et 10m/s pour réaliser un régime turbulent dans le produit et pour rester à l'intérieur du champ electromagnétique pendant un deuxième temps de fonctionnement maximum (t₂) compris entre 0,1s et 5s de manière à réaliser une réduction effective de la contamination microbienne tout en évitant la dégradation et la dénaturation du produit.

2. Procédé selon la revendication 1, **caractérisé en ce que** ledit deuxième temps de fonctionnement maximum (t₂) est compris entre 0,1 s et 3s.

3. Procédé selon la revendication 1 ou 2, **caractérisé en ce que** ladite deuxième température de fonctionnement (T₂) est comprise entre 55°C et 75°C.

4. Procédé selon l'une des revendications précédentes, **caractérisé en ce que** ladite deuxième vitesse de fonctionnement (V₂) est comprise entre 2 m/s et 9m/s et plus de préférence encore de environ 8 m/s.

5. Procédé selon l'une des revendications précédentes, **caractérisé en ce qu'**après ladite étape de surchauffe (c) est prévue une deuxième étape de maintien thermique (d), durant laquelle le produit est maintenu à ladite deuxième température de fonctionnement (T₂) pendant un deuxième temps de maintien thermique (tₛ₂) de préférence compris entre 1 s et 150 s, plus de préférence encore entre 3 s et 100 s.

6. Procédé selon la revendication 5, **caractérisé en ce que**, durant ladite deuxième étape de maintien thermique (d), le produit circule à l'intérieur dudit conduit (6) à une deuxième vitesse de maintien (Vs₂) de 0,3 m/s à 5 m/s, de préférence de 0,5 m/s à 3 m/s et plus de préférence encore de 1 m/s à 2,1 m/s.

7. Procédé selon une ou plusieurs des revendications précédentes, **caractérisé en ce qu'**après ladite étape de maintien (b) le produit est soumis à une étape de pressurisation e) à une surpression (P) susceptible de réduire l'air contenu dans le produit dans ladite deuxième section (17).

8. Procédé selon la revendication 7, **caractérisé en ce que** ladite surpression (P) est comprise entre 5 bars et 40 bars.

9. Procédé selon la revendication 7 ou 8, **caractérisé en ce que** ladite étape de pressurisation e) est réalisée en aval de ladite étape de réchauffage a) et à la fin de ladite deuxième étape de maintien thermique f).

10. Procédé selon une ou plusieurs des revendications précédentes, **caractérisé en ce qu'**une étape de maintien thermique intermédiaire g) est prévue durant ladite étape de surchauffe c) pendant un troisième temps prédéterminé de maintien thermique (tₛᵢ).

11. Procédé selon la revendication 10, **caractérisé en ce que** ledit troisième temps de maintien thermique (tₛᵢ) est substantiellement d'environ 1 s.

12. Procédé selon l'une des revendications 5 à 11, **caractérisé en ce qu'**une étape de refroidissement du produit h) est prévue immédiatement après ladite deuxième étape de maintien thermique d) et **en ce qu'**une étape de préchauffage du produit i) est prévue avant ladite étape de réchauffage a).

13. Installation pour pasteuriser un produit alimentaire contenant des oeufs appliquant le procédé selon une ou plusieurs des revendications 1 à 12, comprenant :
- une section de réchauffage (3) pour réchauffer le produit à une première température de fonctionnement (T₁) supérieure à 50°C ;
- une section de surchauffe (4) pour le préchauffage du produit à une deuxième température de fonctionnement (T₂) supérieure à ladite première température de fonctionnement (T₁) ;
- moyen oscillant (18) pour générer un champ magnétique de radiofréquence dans ladite section de surchauffe (4) ;
- au moins un conduit (6) comprenant une entrée (2) et une sortie (5), une première portion (14) se développant à travers ladite section de réchauffage (3), une deuxième portion (17) se développant à travers ladite section de surchauffe (4) et au moins une portion de connexion (16) pour connecter ladite section de réchauffage (3) à ladite section de surchauffe (4) ;
- au moins une première section de maintien thermique (15) comprise dans ladite portion intermédiaire (16) ;
- moyen (8) pour la circulation du produit dans ledit conduit (6) ;
**caractérisé en ce que** ledit moyen oscillant (18) comprend un applicateur (19) pour irradier ladite deuxième portion de conduite (17) avec ledit champ magnétique de radiofréquence et sans électrode au contact du produit, ledit moyen de circulation (8) étant adapté pour la circulation du produit dans ladite section de surchauffe (4) à une deuxième vitesse de fonctionnement (V₂) comprise entre 0,5m/s et 10m/s pour fournir un régime turbulent correspondant dans le produit pendant un temps de fonctionnement maximum (t₂) de 0,1s à 5s, de manière à réaliser une réduction effective de la contamination microbienne tout en évitant la dégradation et la dénaturation du produit.

14. Installation selon la revendication 13, **caractérisée en ce qu'**elle comprend un système de soupapes (25) pour pressuriser au moins ladite portion de connexion dudit conduit à une surpression supérieure à la pression atmosphérique, de préférence entre 5 bars et 40 bars.
